Europäisches Patentamt

European Patent Office

Office européen des brevets

(19)

(11) **EP 1 064 072 B1**

(12) **EUROPÄISCHE PATENTSCHRIFT**

(45) Veröffentlichungstag und Bekanntmachung des Hinweises auf die Patenterteilung:
**07.01.2004  Patentblatt 2004/02**

(21) Anmeldenummer: **99904756.6**

(22) Anmeldetag: **09.01.1999**

(51) Int Cl.$^7$: **B01D 37/02**, B01J 20/22

(86) Internationale Anmeldenummer:
**PCT/EP1999/000089**

(87) Internationale Veröffentlichungsnummer:
**WO 1999/039806 (12.08.1999 Gazette 1999/32)**

(54) **FILTERHILFSMITTEL**

FILTER AID

ADJUVANT DE FILTRATION

(84) Benannte Vertragsstaaten:
**DE FR GB IT NL**

(30) Priorität: **09.02.1998  DE 19804882**

(43) Veröffentlichungstag der Anmeldung:
**03.01.2001  Patentblatt 2001/01**

(73) Patentinhaber: **Herzog, Stefan**
**80333 München (DE)**

(72) Erfinder: **RETTENMAIER, Josef, Otto**
**D-73494 Rosenberg (DE)**

(74) Vertreter: **GROSSE BOCKHORNI SCHUMACHER**
**Patent- und Rechtsanwälte**
**Frühlingstrasse 43A**
**45133 Essen (DE)**

(56) Entgegenhaltungen:
EP-A- 0 391 687          DE-A- 2 915 677
DE-A- 2 940 390          DE-A- 4 119 288
DE-A- 4 309 845

- **"Der Einsatz von Stärke und Zellstoff", H. WILLMAR; Brauwelt (1985) Heft 4, Seiten 126-129; XP002105531 in der Anmeldung erwähnt**
- **"F&S Filtration in der praktischen Erprobung", K. WACKERBAUER und R. GAUB; Brauwelt (1989) Heft 35, Seiten 1680-1689; XP002105532 in der Anmeldung erwähnt**
- **PATENT ABSTRACTS OF JAPAN vol. 005, no. 089 (C-058), 10. Juni 1981 & JP 56 033018 A (TAKEDA CHEM IND LTD;OTHERS: 01), 3. April 1981**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung bezieht sich auf ein Filterhilfsmittel der dem Oberbegriff des Anspruchs 1 entsprechenden Art.

Ein derartiges Filterhilfsmittel ist aus dem Aufsatz von H. Willmar in der Zeitschrift "Brauwelt" 1985 Nr. 4, Seiten 126 bis 129 bekannt. Darin wird über einen Versuch mit einer Mischung aus Stärke und Zellstoff berichtet, die recht erfolgversprechend sei. Einzelheiten der Mischung werden jedoch nicht angegeben.

Filterhilfsmittel auf Cellulosebasis sind seit langem bekannt ("Ullmanns Enzyklopädie der technischen Chemie, 3. Auflage (1951), erster Band, Seiten 492, Stichwort "Vefilzte Schichten" und 493, Stichwort "Filterungshilfsmittel"). Cellulose wird durch einen mehrstufigen chemischen Prozeß hergestellt, bei dem alle sensorisch wirksamen Stoffe aus dem Rohstoff entfernt werden.

Filterhilfsmittel aus reiner Cellulose finden daher überall dort Anwendung, wo die sensorische Unbedenklichkeit des eingesetzten Filterhilfsmittels von wesentlicher Bedeutung ist. Beispiele für cellulosische Filterhilfsmittel sind: EFC (extraktfreie Cellulose), feine Pulvercellulose, feine fibrillierte Cellulose, kationisierte Pulvercellulose, feine MCC (mikrokristalline Cellulose).

Filterhilfsmittel aus unbehandelten Holzfaserstoffen werden dagegen durch mechanische Zerkleinerung, also nur durch physikalische Behandlung hergestellt und können demnach im Verlauf der Filtration Extraktstoffe (Farbe, Geruch, Geschmack) abgeben. Der Einsatz von Filterhilfsmitteln auf der Basis von naturbelassenen Holzfasern ist daher in der Regel auf technische Filtrationen mit geringeren Ansprüchen hinsichtlich der Sensorik beschränkt. Für Filtrationen im Nahrungs- und Genußmittelbereich, z.B. bei zuckerlösungen (Glucose, Dextrose, Fructose), Melasse, Färbelösungen, Fetten und Ölen und dgl., aber auch für viele technische Zwecke kommen sie nur in Betracht, wenn entweder eine nachgeschaltete Raffination die vollständige Entfernung der unerwünschten Bestandteile ermöglicht (Aktivkohle, Ionentauscher etc.) oder wenn die Extraktstoffe prozeßbedingt nicht störend wirken können (Kaschierung oder Neutralisation durch prozeßeigene Farb- oder Geruchstoffe).

Das schwierige Gebiet der Getränkefiltration erfordert einerseits die vollkommene sensorische Neutralität des eingesetzten Filterhilfsmittels; andererseits ist die Zahl der alternativ einsetzbaren Filterhilfsmittel aus wirtschaftlichen Gründen begrenzt, da die maximalen Aufwendungen für das Filterhilfsmittel vom Preis der in diesem Markt dominierenden mineralischen Filterhilfsmittel festgelegt wird.

Üblicherweise erfolgt die Getränkefiltration in zwei Stufen. In der ersten Stufe handelt es sich in der Regel um mechanische Trenntechniken (z.B. Zentrifugen) oder um eine Grobfiltration, bei der die Flüssigkeit meist eine angeschwemmte Schicht eines Filterhilfsmittels passiert. Dieser Stufe ist häufig eine Feinfiltration nachgeschaltet.

Das maßgebliche Filterhilfsmittel für die Anschwemmfiltration auf dem Getränke-, insbesondere Biersektor ist Kieselgur. Ein hoher Prozentsatz der Weltbierproduktion wird mittels Kieselgurfiltration geklärt. Dies sind derzeit insgesamt mehr als 1,1 Mrd. hl Bier.

Der Gesamtbedarf an Filterhilfsmitteln wird weltweit auf ca. 1 Mio. t pro Jahr geschätzt, wobei der weitaus größte Anteil dieser Menge von anorganischen Stoffen wie eben Kieselgur, Perlite oder Bentonit gestellt wird. Von dieser Gesamtmenge werden weltweit etwa 250.000 t bis 300.000 t pro Jahr von der Getränkeindustrie verbraucht, zum großen Teil von Brauereien, aber auch von Herstellern von Wein und Fruchtsäften.

Der Anteil von Filterhilfsmitteln, die auf organischen, nachwachsenden Rohstoffen basieren (Cellulose, Holzfaserstoffe etc.) beläuft sich bislang nur auf ca. 60.000 t pro Jahr, obwohl deren Verwendung im Vergleich zu anorganischen Filterhilfsmitteln zahlreiche Vorteile bietet.

Der spezifische Verbrauch kann infolge der niedrigen Naßkuchendichte (verglichen mit mineralischen Filterhilfsmitteln) um bis zu 70 % niedriger sein. Gleichzeitig werden aufgrund der faserförmigen Struktur, der zerklüfteten Oberfläche sowie dem großen Porenvolumen, häufig höhere Durchflußwerte und längere Filterstandzeiten erreicht. Pflanzen- und Cellulosefasern verhalten sich aufgrund ihrer Struktur elastisch gegen Druckstöße. Sie überbrücken kleinere Schadstellen im Filtergewebe und erleichtern durch den inneren Haftverbund das spätere Abreinigen des Filterkuchens. Zudem birgt die Verwendung von organischen Filterhilfsmitteln weder gesundheitliche Risiken noch schädliche Auswirkungen für Umwelt und Natur. Pumpen und Förderelemente der Filtrationsanlagen werden aufgrund des nicht-abrasiven Verhaltens bestmöglich geschont. Schließlich lassen sich die verbrauchten Filterkuchen beispielsweise über Landwirtschaft, Kompostierung oder Viehverfütterung relativ leicht entsorgen.

Allerdings sind die organischen Filterhilfsmittel zum Teil um ein Mehrfaches teurer als Kieselgur oder sie besitzen Filtrationseigenschaften, die denen der Kieselgur nicht in vollem Maß entsprechen.

Aus diesem Grund haben sich organische Filterhilfsmittel bisher gegen Kieselgur nicht in Szene setzen können bzw. sind allenfalls zusammen mit Kieselgur verwendet worden (Aufsatz von J. Speckner "Cellulose als Filterhilfsmittel" in Z. "Brauwelt", Jahrgang 124 (1984), Heft 46, Seiten 2058 bis 2066, insbesondere Seite 2062, linke Spalte oben).

Kieselgur erweist sich jedoch in zunehmendem Maße als problematisch. Dies hängt wesentlich damit zusammen, daß die Anwender gegenüber der Kieselgur eine zunehmend kritische Haltung einnehmen, da inzwischen in verschiedenen Studien auf eine mögliche Lungengängigkeit bestimmter Kieselgur-Typen hingewiesen wurde.

Für die Handhabung gelten strenge Vorschriften, die in Deutschland mehr und mehr beachtet und durchgesetzt werden.

Ein weiterer Aspekt besteht darin, daß die Entsorgung der Kieselgur in Industrieländern zunehmend kritischer wird. Vielerorts müssen Filterrückstände, die Kieselgur enthalten, zur Deponie gebracht werden, was teilweise hohe Kosten verursacht. Organische Filterhilfsmittel können dagegen über Kompostierung oder Tierfutter wieder in den natürlichen Rohstoffkreislauf eingebunden werden, was Deponien entlastet und geschlossene Entsorgungskonzepte schafft.

Müssen kontaminierte Filterkuchen aus Chemieanwendungen der thermischen Verwertung zugeführt werden, so stören im Falle der minerlischen Filterhilfsmittel die hohen Aschegehalte und die niedrigen Eigenbrennwerte.

Diese drängenden Probleme haben dazu geführt, daß schon seit längerem Möglichkeiten des Ersatzes der mineralischen Filterhilfsmittel, insbesondere der Kieselgur, bei der Filtrierung von Getränken und ähnlichen Flüssigkeiten untersucht wurden sind. Dabei wurde der Cellulose als Filterhilfsmittel besondere Aufmerksamkeit zugewandt. Die Cellulose ist zwar an sich seit langem als Filterhilfsmittel bekannt, doch geht es im vorliegenden Zusammenhang auch um die Endstufe der Bierfiltration, die bei der Bierfiltration eine weitgehende Entfernung von Keimen und eine entsprechende Stabilisierung des Produktes bringen soll (siehe J. Speckner "Cellulose als Filterhilfsmittel", Brauwelt 124 (1984), Heft 46, Seiten 2058-2066; K. Wakkerbauer und R. Gaub "F & S Filtration in der praktischen Erprobung, Brauwelt (1989) Heft 35, Seiten 1680-1689).

Die Cellulose ist als nachwachsender Naturstoff relativ leicht erhältlich und geht, ohne schädliche Wirkungen zu hinterlassen, ohne weiteres wieder in den natürlichen Kreislauf über.

Es sind daher auch schon Versuche bekannt geworden, ein Filtermaterial zu schaffen, daß ausschließlich aus Zellstoffen und Zellstoffderivaten besteht, keine gesundheitsgefährdenden oder umweltschädlichen Komponenten sowie mindestens ebenso hohe Abscheidegrade wie die asbestfreien Tiefenfilterschichten nach dem Stand der Technik aufweist und das sehr geringe extrahierbare Bestandteile aufweist (DE 43 09 845 C2).

Bei diesem bekannten Filterhilfsmittel ist jedoch ein Gehalt von Celluloseacetatfasern von bis zu 50 Gewichtsprozentanteilen an der Gesamtmenge integrierend. Die Celluloseacetatfasern sollen als selbst einen inneren Zusammenhang schaffender, gerüstbildender Baustein in einer Menge bis zu 50 % des Gesamtgewichtes des Filterhilfsmittels zugegen sein. In das Gerüst sind in homogener Verteilung mikrokristalline und mikrofeine Cellulosen eingelagert, die sich in dem Gerüst bewegen können und aus sich selbst heraus eine Homogenisierung der Filterschicht bewirken.

Das bei dem Filterhilfsmittel nach der DE 43 09 845 C2 notwendige Celluloseacetat stellt einen Kunststoff dar, der keine natürliche organische Komponente und nicht in der gleichen Weise abbaubar ist wie die Celluloseanteile dieses Filterhilfsmittels.

Der Erfindung liegt die Aufgabe zugrunde, ein Filterhilfsmittel zu schaffen, welches aus nachwachsenden Rohstoffen besteht und natürlich abbaubar ist.

Die Aufgabe wird durch die in Anspruch 1 wiedergegebene Erfindung gelöst.

Alle Prozentsätze in diesem Text sind Gewichtsprozente.

Sämtliche Komponenten des Filterhilfsmittels sollen also Naturstoffe sein, die durch Verrottung oder sonstigen natürlichen Verfall wieder in den Naturkreislauf übergehen können. Das bedeutet nicht, daß die natürlichen organischen Komponenten keinerlei anorganische Anteile enthalten dürfen. Sie sollen aber in ihrem Charakter ganz überwiegend organisch geprägt sein. Selbst Cellulose hat einen Aschegehalt von ca. 1,0 Gewichtsprozent. Anorganische Anteile in einer Menge bis etwa 5 Gew.-% der Gesamtmenge des Filterhilfsmittels stehen der Einordnung als ausschließlich natürliche organische Komponente im vorliegenden Zusammenhang nicht entgegen.

Wie hoch die Prozentsätze der einzelnen Komponenten der Mischung gewählt werden, hängt von Art und dem Grad der Belastung der zu filtrierenden Flüssigkeit ab, zum Beispiel bei Bier von dessen Trübung. Bei stärkerer Trübung bzw. zunehmender Größe der mitgeführten Partikel nimmt der Prozentsatz der gröberen Komponenten des Filterhilfsmittels zu. Bei geringerer Trübung und feineren mitgeführten Partikeln muß die mit dem Filterhilfsmittel gebildete Filterschicht dichter sein und somit mehr feinere Komponenten enthalten.

Die Komponenten des Filterhilfsmittels sind nicht durch ihre Abmessungen gekennzeichnet, weil die Abmessungen für die Filtrierwirksamkeit einer mit einer bestimmten Komponente gebildeten Filterschicht nicht unbedingt aussagekräftig sind. Für die Filtrierwirksamkeit kann auch die Gestalt der Partikel der einzelnen Komponente und ihre Oberflächenbeschaffenheit von wesentlichem Einfluß sein.

Deshalb wurde zur Beschreibung der Feinheit der Mischung ein filterfunktioneller Wert in Gestalt des Wasserwertes gewählt, der ein Maß für die Durchlässigkeit einer Filtermasse und somit unabhängig von der äußeren Ausbildung der Partikel der betreffende Komponente ist.

Die Bestimmung des Wasserwertes erfolgt mit einem Labordruckfilter (Durchmesser 50 mm) und einem Wassefiochbehälter mit Niveauregelung. Zwischen dem Niveau des Wassers im Wasserhochbehälter und dem Filterboden ist eine Differenz von 2 m einzuhalten.

Der Laborfilter wird mit einer angefeuchteten durchlässigen Celluloseschicht (Schenk D-Schicht mit der Siebseite nach unten) versehen und verschlossen. Anschließend werden 25 g Filterhilfsmittel in 200 bis 300 ml reinem Wasser aufgeschlämmt und vollständig in den Laborfilter überführt. Der Laborfilter wird an den Wasserhochbehälter angeschlossen und entlüftet. Nach einer Minute werden 500 ml Wasser abfiltriert und anschließend die Zeit für die nächsten 100 ml Filtrat gestoppt Der Wasserwert ergibt sich aus der gestoppten Zeit wie folgt:

$$\text{Wasserwert} = \frac{480}{\text{Zeit in Minuten}}$$

Wenn sich hierbei ein Wasserwert kleiner 150 ergibt, erfolgt die Bestimmung wie oben, jedoch unter Anwendung von nur 4 g Filterhilfsmittel. Dann ergibt sich

$$\text{Wasserwert} = \frac{76,8}{\text{Zeit in Minuten.}}$$

Je kleiner also die Zeit ist, die eine bestimmte Wassermenge zum Durchströmen der Filterschicht benötigt, desto größer ist der Wasserwert.

Es hat sich gezeigt, daß durch eine Kombination von natürlichen organischen Komponenten mit dem entsprechenden Wasserwert der Mischung Filterhilfsmittel erzielbar sind, deren Filterwirksamkeit diejenige der bekannten Kieselgurfilter erreichen kann. Dabei besteht das gesamte Filterhilfsmittel aus nachwachsenden und natürlich abbaubaren Stoffen. Bei der dem Anspruch 1 zugrundeliegenden Mischung ist der Einsatz eines fremdartigen Gerüstbausteins nicht mehr erforderlich.

Bei stark mit Trübstoffen belasteten Flüssigkeiten kann es sich gemäß Anspruch 2 empfehlen, dem Hilfsmittel einen unter Umständen erheblichen Anteil an gröberer Cellulose mit einem Wasserwert von 2500 - 1200 hinzuzufügen.

Dieser Celluloseanteil bildet seinerseits ein Gerüst, welches das Filterhilfsmittel aufzulockern und einem vorzeitigen Verstopfen der Filterschicht durch die größere Menge an Trübstoffen vorbeugt.

In manchen Fällen kann es sich auch empfehlen, dem Filterhilfsmittel gemäß Anspruch 3 einen Anteil von 20 bis 70 % Cellulose mit einem Wasserwert von 1200 - 600 zuzusetzen, also eine etwas weniger grobe Cellulose für nicht so stark getrübte Unfiltrage.

Gemäß Anspruch 4 kann es auch zweckmäßig sein, dem Filterhilfsmittel einen Anteil von 1 bis 30 % an kationisierter Cellulose mit einem Wasserwert von 900 - 50 (Anspruch 5) und/oder außer der Stärke noch mindestens ein weiteres Polyglucosid zuzusetzen (Anspruch 6.

Kationisierte Cellulose bedeutet eine solche, bei der die Oberfläche der Partikel z.B. mit einem Tensid oder Harz behandelt ist. Hierdurch erfolgt eine gezielte Veränderung der Adsorptionsfähigkeit. Es werden dadurch Bestandteile aus der Flüssigkeit herausgefiltert, die der Filter sonst nicht zurückhalten könnte.

Es kann zweckmäßig sein, dem Filterhilfsmittel gemäß Anspruch 7 einen Anteil an CTMP (Chemical Thermal Mechanical Pulp) zuzusetzen, ebenso wie gemäß Anspruch 8 einen Anteil an EFC, d.h. einem Filterhilfsmittel, welches aus in besonderer Weise einer Flüssigkeitsbehandlung unterzogenen Pflanzenfasern besteht. Die Behandlung ist in der deutschen Patentanmeldung 197 10 315.4-27 beschrieben, deren Offenbarung in die vorliegende Anmeldung einbezogen sein soll.

Der Wasserwert dieses Zusatzes liegt vorteilhaft im Bereich von 150 bis 10 (Anspruch 9).

Als Richtwerte für die Einstellung der Filterhilfsmittelmischung in Abhängigkeit von der Trübung des Unfiltrats können die Werte nach Anspruch 10 angesehen werden.

Das Filterhilfsmittel kann in Form eines feinteiligen schüttfähigen Materials vorliegen (Anspruch 11), mit dem sich Anschwemmfilterschichten herstellen lassen.

Nachstehend ist eine Vergleichsfiltration mit einem üblichen anorganischen Filterhilfsmittel mit dem erfindungsgemäßen cellulosischen Filterhilsmittel (Cell. FHM) wiedergegeben.

Als zu filtrierende Flüssigkeit dient ein Bier mit einem anfänglichen Trübungswert < 40 EBC, welches in einem Anschwemmfilter filtriert wurde.

Der EBC-Wert ist ein Maß für die Trübung (EBC = European Brewery Convention). EBC-Werte bis etwa 30 bezeichnen eine geringe Trübung, EBC-Werte von etwa 30 bis 120 eine hohe Trübung. Die Trübungsmessung bei den Versuchen erfolgte mit einem 90° Streulicht-Photometer KT 30 der Fa. Sigrist.

Die Versuche wurden mit einem Laborglasfilter durchgeführt. Dabei wurden die erste und die zweite Voranschwemmung des um Wasser suspendierten Filterhilfsmittels mittels einer Dosierpumpe aufgebracht, die nach der Etablierung der Voranschwemmungen auch die sogenannte Dosage bewerkstelligte, d.h. eine kontinuierliche weitere Zugabe von suspendiertem Filterhilfsmittel während des eigentlichen Fittrationsvorganges. Die nachfolgenden Angaben in g beziehen sich auf die Menge des jeweiligen Stoffes, die in den die Voranschwemmungen und die Dosage ergebenden Suspensionen enthalten ist. Die Suspendierung erfolgte mit folgenden Wassermengen:

| a. | erste Voranschwemmung (VA): | 8 L Wasser |
|---|---|---|
| b. | zweite VA: | 10 L. Wasser |
| c. | Dosage | 10 L Wasser |

Die Fördermengen der Pumpen waren wie folgt:

Flow Dosierpumpe: 7,2 L/h

Flow Filterpumpe: 40,2 L/h

Bei der jeweiligen Dosage wurde der Flow der Dosierpumpe auf die Hälfte reduziert. Daraus ergaben sich die folgenden Anschwemmzeiten:

a) erste VA: Anschwemmzeit 8,4 min

b) zweite VA: Anschwemmzeit 13,0 min

Bei den Voranschwemmungen und der Dosage wurden folgende Stoffe eingesetzt:

Grobfiltration:

| **Anorganische Filterhilfsmittel** | |
|---|---|
| 1. Voranschwemmung (VA): | 46,4 g Hyflow Supercel |
| | 18,6 g Harbolite P 400 |
| 2. Voranschwemmung (VA): | 121,2 g Hyflow Supercel |
| | 12,3 g Celatom FP1 SL |
| Dosage: | 25,6 g Hyflow Supercel |
| | 105,1 g Celatom FP1 SL |
| | 2,6 g Becofloc 7 |

| **Cellulosische Filterhilfsmittel** | |
|---|---|
| 1. Voranschwemmung (VA): | 65,0 g ARBOCEL BZN 600-30 PH |
| 2. Voranschwemmung (VA): | 45,2 g ARBOCEL BZN 600-30 PH |
| | 37,1 g Weizenstärke PT20002 |
| | 12,5 g Vivapur 99 |
| | 2,6 g Becofloc 7 |
| Ww der kpl. Anschwemmschicht | ca. 140 |
| Dosage: | analog 2. VA |

Feinfiltration:

| **Anorganische Filterhilfsmittel** | |
|---|---|
| 1. Voranschwemmung (VA): | 46,4 g Hyflow Supercel |

(fortgesetzt)

| Anorganische Filterhilfsmittel | |
|---|---|
| | 18,6 g Harbolite P 400 |
| 2. Voranschwemmung (VA): | 164,8 g Harbolite P 400 |
| | 24,6 g Celatom FP1 SL |
| | 1,0 g Becofloc 10 |
| Dosage: | 105,1 g Celatom FP1 SL |
| | 2,6 g Becofloc 10 |

| Cellulosische Filterhilfsmittel | |
|---|---|
| 1. Voranschwemmung (VA): | 58,5 g ARBOCEL BZN 600-30 PH |
| | 6,5 g ARBOCEL L 600-10 |
| 2. Voranschwemmung (VA): | 59,1 g ARBOCEL BZN 600-30 PH |
| | 59,1 g Weizenstärke C* Gel 20006 |
| | 20,5 g Vivapur 99 |
| | 2,6 g Becofloc 10 |
| Ww der kpl. Anschwemmschicht | ca. 90 |
| Dosage: | 32,8 g ARBOCEL BZN 600-30 PH |
| | 32,8 g Weizenstärke C* Gel 20006 |
| | 10,3 g Vivapur 99 |
| | 2,6 g Becofloc 10 |

In dem vorstehenden Tabellen haben die verwendeten Handelsnamen folgende Bedeutung:

Hyflow Supercel =                         Kieselgur der Fa. World Minerals
Harbolite P 400 =                         Perlite der Firma World Minerals
Celatom FP1 SL =                         Kieselgur der Fa. Eagle Picher
Becofloc 7 =                              Filterflocken der Fa. Begerow
Becofloc 10 =                             Filterflocken der Fa. Begerow
ARBOCEL BZN 600-30 PH =        mikrofeine Pulvercellulose aus Naturfasern
ARBOCEL L 600-10 =                         "
Vivapur 99 =                              mikrokristalline Cellulose, durchschnittliche Partikelgröße ca . 50μm
Weizenstärke C* Gel 20006 =    Weizenstärke der Fa. Cerestar

Mit diesen Filtermerkmalen ergab die Vergleichsfiltration folgende Ergebnisse, wobei der Differenzdruck dem Strömungswiderstand entspricht und ein Maß dafür ist, wie weit sich der Filter zugestzt und sich dem Ende seiner Betriebsdauer genähert hat. Die "Trübung" entspricht der Klärschärfe des Filters.

| | Anorg. FHM | Cell. FHM |
|---|---|---|
| **Grobfiltration:** | | |
| Diff.'druck t = 0 min. | 0,03 bar | 0,02 bar |
| Diff.'druck t = 150 min. | 1,62 bar | 0,43 bar |
| Diff.'druck t = 240 min. | Keine Daten* | 1,77 bar |
| Trübung nach 150 min. | 0,42 EBC | 0,70 EBC |

*Beim anorg. FHM wurde der Versuch wegen zu großem Diff.'druck nach 150 Min. abgebrochen.

(fortgesetzt)

| | Anorg. FHM | Cell. FHM |
|---|---|---|
| **Grobfiltration:** | | |
| Trübung nach 240 min. | Keine Daten* | 0,52 EBC |

*Beim anorg. FHM wurde der Versuch wegen zu großem Diff.'druck nach 150 Min. abgebrochen.

| | Anorg. FHM | Cell. FHM |
|---|---|---|
| **Feinfiltration:** | | |
| Diff.'druck t = 0 min. | 0,04 bar | 0,02 bar |
| Diff.'druck t = 180 min. | 0,63 bar | 0,16 bar |
| Trübung nach 180 min. | 0,18 EBC | 0,20 EBC |

Es zeigt sich also, daß die Differenzdrücke nach gleichen Filtrationszeiten bei dem cellulosischen FHM wesentlich niedriger liegen als bei dem anorganischen FHM, was bedeutet, daß die Betriebsdauer bis zur Erreichung eines nicht mehr tragbaren Differenzdruckes deutlich länger ist. Das bedeutet auch eine Einsparung an Filterhilfsmitteln pro Mengeneinheit der zu filtrierenden Flüssigkeit. Die Verbrauchsmengen konnten gegenüber anorganischem FHM um annähernd 30 % reduziert werden.

**Patentansprüche**

1. Filterhilfsmittel für die Anschwemmfiltration von Flüssigkeiten, insbesondere von Getränken, enthaltend Cellulose und Stärke,
   **dadurch gekennzeichnet,**
   **daß** es in Mischung folgende Komponenten (in Gewichtsprozent) enthält:

   10 bis 75 %      Cellulose mit einem Wasserwert von 600 bis 150
   10 bis 45 %      mikrokristalline Cellulose mit einem Wasserwert von 100 bis 10
   10 bis 30 %      in Kaltwasser unlösliche Stärke mit einem Wasserwert < 20
   Rest auf 100 %    Zusätze,

   und daß der Wasserwert der Mischung < 300 ist.

2. Filterhilfsmittel nach Anspruch 1, **dadurch gekennzeichnet, daß** es als Zusatz einen Anteil von 5 bis 70 % Cellulose mit einem Wasserwert von 2500 bis 1200 umfaßt.

3. Filterhilfsmittel nach Anspruch 1 oder 2, **dadurch gekennzeichnet, daß** es als Zusatz einen Anteil von 20 bis 70 % Cellulose mit einem Wasserwert von 1200 bis 600 umfaßt.

4. Filterhilfsmittel nach einem der Ansprüche 1 bis 3, **dadurch gekennzeichnet, daß** es als Zusatz einen Anteil von 1 bis 30 % an kationisierter Cellulose umfaßt.

5. Filterhilfsmittel nach Anspruch 4, **dadurch gekennzeichnet, daß** die kationisierte Cellulose einen Wasserwert von 900 bis 50 aufweist.

6. Filterhilfsmittel nach einem der Ansprüche 1 bis 5, **dadurch gekennzeichnet, daß** es außer der Stärke als Zusatz mindestens ein weiteres Polyglucosid enthält.

7. Filterhilfsmittel nach einem der Ansprüche 1 bis 6, **dadurch gekennzeichnet, daß** es als Zusatz einen Anteil an CTMP (Chemical Thermal Mechanical Pulp) umfaßt.

8. Filterhilfsmittel nach einem der Ansprüche 1 bis 7, **dadurch gekennzeichnet, daß** es als Zusatz einen Anteil EFC (extraktfreie Cellulose) umfaßt.

9.  Filterhilfsmittel nach Anspruch 8, **dadurch gekennzeichnet, daß** der Wasserwert von EFC 600 bis 10 beträgt.

10. Filterhilfsmittel nach einem der Ansprüche 1 bis 9, **dadurch gekennzeichnet, daß** der Wasserwert der Gesamtmischung bei einer Trübung des Unfiltrats entsprechend einem EBC (European Brewery Convention) - Wert bis 110 < 150 und bei einer Trübung des Unfiltrats entsprechend einem EBC-Wert von > 110 150 bis 300 beträgt.

11. Filterhilfsmittel nach einem der Ansprüche 1 bis 10, **dadurch gekennzeichnet, daß** es vor dem Anschwemmen als feinteiliges schüttfähiges Material vorliegt.

## Claims

1.  Filter aid for precoat-filtration of liquids, especially beverages, containing cellulose and starch,
    **characterised in that**
    the mixture contains the following components (percentage by weight):

    10 to 75%    cellulose with a water equivalent from 600 to 150
    10 to 45%    micro crystalline cellulose with a water equivalent from 100 to 10
    10 to 30%    starch insoluble in cold water with a water equivalent < 20
    up to 100%   additives

    and that the water equivalent of the mixture is less than 300.

2.  Filter aid according to claim 1, **characterised in that** it contains as an additive a proportion from 5 to 70% cellulose with a water equivalent from 2500 to 1200.

3.  Filter aid according to claim 1 or 2, **characterised in that** it contains as an additive a proportion from 20 to 70% cellulose with a water equivalent from 1200 to 600.

4.  Filter aid according to any one of claims 1 to 3, **characterised in that** it contains as an additive a proportion from 1 to 30% cationic cellulose.

5.  Filter aid according to claim 4, **characterised in that** the cationised cellulose provides a water equivalent from 900 to 50.

6.  Filter aid according to any one of claims 1 to 5, **characterised in that** in addition to starch, it contains at least one further polyglucoside as an additive.

7.  Filter aid according to any one of claims 1 to 6, **characterised in that** it contains as an additive a proportion of CTMP (Chemical Thermal Mechanical Pulp).

8.  Filter aid according to any one of claims 1 to 7, **characterised in that** it contains as a additive a proportion of EFC (Extract-Free Cellulose).

9.  Filter aid according to claim 8, **characterised in that** the water equivalent of the EFC is 600 to 10.

10. Filter aid according to any one of claims 1 to 9, **characterised in that**, in the case of a turbidity of the unfiltered liquid corresponding to an EBC (European Brewery Convention) value up to 110, the water equivalent of the overall mixture is < 150, and with a turbidity of the unfiltered liquid corresponding to an EBC-value of >110, the water equivalent of the overall mixture is 150 to 300.

11. Filter aid according to any one of claims 1 to 10, **characterised in that,** before precoating, it is present as a finely particulate, pourable material.

**Revendications**

1.  Adjuvant de filtration pour la filtration de liquides par sédimentation, en particulier de boissons contenant de la cellulose et de l'amidon,
    **caractérisé en ce qu'**
    il renferme en mélange les composants suivants (en pourcentage en poids) :
    10 à 75 % de cellulose ayant un équivalent en eau de 600 à 150,
    10 à 45 % de cellulose microcristalline ayant un équivalent en eau de 100 à 10,
    10 à 30 % d'amidon insoluble dans l'eau froide ayant un équivalent en eau < 20,
    le reste à 100 % en additifs,
    et l'équivalent en eau du mélange est < 300.

2.  Adjuvant de filtration selon la revendication 1,
    **caractérisé en ce qu'**
    il comprend comme additif une fraction de 5 à 70 % de cellulose ayant un équivalent en eau de 2500 à 1200.

3.  Adjuvant de filtration selon la revendication 1 ou la revendication 2,
    **caractérisé en ce qu'**
    il comprend comme additif une fraction de 20 à 70 % de cellulose ayant un équivalent en eau allant de 1200 à 600.

4.  Adjuvant de filtration selon l'une des revendications 1 à 3,
    **caractérisé en ce qu'**
    il comprend comme additif une fraction de 1 à 30 % de cellulose cationisée.

5.  Adjuvant de filtration selon la revendication 4,
    **caractérisé en ce que**
    la cellulose cationisée possède un équivalent en eau de 900 à 50.

6.  Adjuvant de filtration selon l'une des revendications 1 à 5,
    **caractérisé en ce qu'**
    il renferme en dehors de l'amidon, en tant qu'additif, au moins un autre polyglucoside.

7.  Adjuvant de filtration selon l'une des revendications 1 à 6,
    **caractérisé en ce qu'**
    il comprend en tant qu'additif un CTMP (pâte de cellulose mécanique, thermique, chimique).

8.  Adjuvant de filtration selon l'une des revendications 1 à 7,
    **caractérisé en ce qu'**
    il comprend en tant qu'additif une fraction d'EFC (cellulose exempte d'extrait).

9.  Adjuvant de filtration selon la revendication 8,
    **caractérisé en ce que**
    l'équivalent en eau de l'EFC s'élève de 600 à 10.

10. Adjuvant de filtration selon l'une des revendications 1 à 9,
    **caractérisé en ce que**
    pour un trouble du résidu de filtration correspondant à une valeur de EBC (European Brewery Convention) allant jusqu'à 110, l'équivalent en eau du mélange total est < 150, et est de 150 à 300 pour un trouble du résidu de filtration correspondant à une valeur de EBC de > 110.

11. Adjuvant de filtration selon l'une des revendications 1 à 10,
    **caractérisé en ce qu'**
    avant la sédimentation il se présente sous forme de produit finement divisé, apte à l'écoulement.